# FASCICULE DE BREVET EUROPEEN

(11) **EP 4 162 157 B1**
(45) Date de publication et mention de la délivrance du brevet: **21.08.2024**
(21) Numéro de dépôt: 21737715.9
(22) Date de dépôt: 08.06.2021
(51) Int. Cl.: F03C 1/047, F04B 1/047, F04B 1/107, F16C 33/04, F04B 1/1071

(54) **MACHINE HYDRAULIQUE COMPRENANT DES PALIERS DE SUPPORT DE LA PARTIE TOURNANTE**
HYDRAULISCHE MASCHINE EINSCHLIESSLICH STÜTZLAGER FÜR DEN ROTIERENDEN ABSCHNITT
HYDRAULIC MACHINE INCLUDING SUPPORT BEARINGS FOR THE ROTATING PART

(30) Priorité: 09.06.2020 FR 2006001
(43) Date de publication de la demande: 12.04.2023
(73) Titulaire: Poclain Hydraulics Industrie, 60410 Verberie (FR)
(72) Inventeur: ENGRAND, Julien, 60410 VERBERIE (FR); GRILLON, Gilles, 60410 VERBERIE (FR); QUERTELET, Stéphane, Bernard, 60410 COMPIEGNE (FR); RESPECTE, Jérémy Gérard, 60410 VERBERIE (FR); LUCIENNE, Philippe, 60410 VERBERIE (FR); JALABERT, Patrick, 60410 VERBERIE (FR); FREY, Adam, 60410 VERBERIE (FR); GLODOWSKY, Scott, 60410 VERBERIE (FR)
(74) Mandataire: Regimbeau
(86) Numéro de dépôt international: PCT/FR2021/051024
(87) Numéro de publication internationale: WO 2021/250348

(56) Documents cités:
- EP-A1- 0 191 674
- WO-A1-02/16769
- FR-A1- 2 967 201
- FR-A1- 3 014 940

## Description

### DOMAINE DE L'INVENTION

L'invention concerne les machines hydrauliques.

### ETAT DE LA TECHNIQUE

On connaît de nombreux types de machines hydrauliques. Une telle machine comprend par exemple essentiellement cinq ensembles : un boîtier, un arbre, un ensemble formant moteur ou pompe disposé entre le boîtier et l'arbre, des paliers de guidage à rotation relative de l'arbre et du boîtier et un frein.

Le boîtier est destiné à être fixé au châssis d'une machine ou d'un véhicule. Il comprend une came à lobes multiples prise en sandwich entre deux éléments latéraux du boîtier.

L'arbre supporte une prise de force adaptée pour porter un accessoire qui doit être entraîné à rotation, par exemple la jante d'une roue ou tout autre équipement, dans le cas où la machine constitue un moteur et délivre un couple d'entrainement sur l'accessoire. Dans le cas où elle constitue une pompe, la prise de force reçoit un couple mécanique moteur d'entrainement appliqué sur l'entrée de la machine.

L'ensemble formant moteur ou pompe est par exemple à pistons radiaux. Il comprend un distributeur, un bloc-cylindres qui présente des cylindres radiaux logeant chacun un piston portant chacun un galet en appui contre la came.

Lorsque le distributeur applique cycliquement un fluide sous pression à l'intérieur des cylindres, la sollicitation des pistons et des galets associés sur la came entraîne le bloc-cylindres à rotation par rapport à la came et par conséquent par rapport au boîtier. Le bloc-cylindres étant lié à rotation avec l'élément central de l'arbre, l'arbre est entraîné à rotation par la pression du fluide appliquée par le distributeur. La machine constitue alors un moteur. Lorsque, au contraire, un effort mécanique est appliqué par la prise de force sur l'arbre dans le sens d'un entraînement à rotation par rapport au boîtier, le déplacement des galets et des pistons par rapport aux lobes de la came induit une variation de volume des cylindres et par conséquent applique une pression de fluide sur le distributeur. La machine fonctionne alors en pompe.

Cette machine est réversible, et donc fonctionne indifféremment en tant que pompe ou moteur, et peut également tourner dans deux sens de rotation. Une telle machine hydraulique peut donc se retrouver dans quatre situations différentes, qui définissent quatre quadrants de valeur de pression et de sens de débit : marche avant, en traction ou en retenue, et marche arrière, en traction ou en retenue.

Le frein est formé d'un empilement de disques liés alternativement à rotation les uns à l'arbre et les autres au boîtier. Les disques sont sollicités en appui mutuel, en position de freinage, par un organe élastique. Un effort antagoniste à l'organe élastique peut être appliqué dans une chambre de commande afin de placer le frein en position de défreinage.

Une configuration connue particulière est celle dans laquelle la machine comprend une jupe rigidement solidaire de l'arbre et s'étendant autour d'au moins une partie du boîtier. Cette jupe forme ainsi une extension de l'arbre s'étendant à partir d'une extrémité axiale de ce dernier pour entourer la partie du boîtier. Cet ensemble tourne d'un seul bloc. De plus, la machine comprend deux paliers de guidage de la rotation de l'arbre par rapport au boitier, composés en général de roulements coniques opposés formant un moyeu, c'est-à-dire permettant la reprise d'efforts radiaux et axiaux, chacun en appui directement contre le boitier et la jupe. Lorsque la machine hydraulique est destinée à un entraînement d'organe de machine, tel qu'une roue ou un barbotin de chenille, les paliers du moteur sont essentiellement dimensionnés pour assurer les fonctions de transmission du couple, mais aussi de support du poids de la machine pendant le roulement, ou pour faire face aux à-coups de tension de la chenille. Pour ces raisons, le dimensionnement des roulements formant paliers est proportionnel à ces efforts, et les roulements sont avantageusement situés au plus près de la prise de force formant fixation de roue ou de barbotin de chenille. Ce montage est avantageux car très robuste pour faire face aux efforts de roulage ou de traction de chenille, et donne une bonne tenue et une bonne durée de vie de la fonction de moyeu vis-à-vis des sollicitations de roulage ou d'entrainement de chenille.

Bien que cette configuration soit intéressante, elle présente des inconvénients.

Ainsi, il est fréquent que l'arbre soit relativement long de sorte qu'il a tendance à plier.

De plus, le bloc-cylindres dans lequel se meuvent les pistons a tendance à solliciter l'arbre en produisant des efforts parasites qui perturbent les paliers de roulement du moteur. Ces efforts parasites résultent des poussées alternées des pistons sur la came et sont donc perpendiculaires à l'axe. Par ailleurs, particulièrement dans le cas des distributeurs à distribution plane, le distributeur engendre des poussées axiales qui sont transmises au bloc-cylindres puis à l'arbre en direction opposée au bloc-cylindres.

Les efforts parasites des pistons se reportent donc en flexion sur l'arbre et sur les roulements.

Les efforts parasites du distributeur se reportent particulièrement sur le roulement le plus éloigné du distributeur. Ils ont également tendance à contrarier le serrage des deux roulements coniques, nommé précharge ou précontrainte des roulements, et qui sert au montage de deux roulements coniques opposés. Cette précontrainte est assurée par le serrage des deux bagues internes des roulements sur l'arbre, réalisé par le calage d'éléments empilés du côté de la bague opposé au distributeur, montés sur cannelures et maintenus en position par un anneau d'arrêt. Cette précontrainte est prévue pour faire face aux efforts de roulage et d'entrainement de telle sorte que les roulements doivent toujours rester en appui. Un effort axial qui dépasse la précharge induit un écartement des roulements, une perte de contact d'un des roulements, l'apparition d'un jeu dans le guidage de l'arbre et une destruction rapide des roulements. Un effort axial parasite venant de la poussée du distributeur doit être compensé par une augmentation de la précontrainte. Or une augmentation de la précontrainte génère un coincement, et donc une perte de rendement en rotation ainsi qu'une baisse de la durée de vie.

De plus, les paliers de roulement du moteur qui sont normalement dédiés à l'effort de transmission de la machine reçoivent ces efforts parasites. On est donc conduit ou bien à rendre certaines des pièces plus massives, notamment ces paliers, ce qui pénalise le volume total de la machine, ou bien à réduire ses performances pour éviter de casser une pièce.

Un but de l'invention est d'améliorer la configuration particulière précitée en palliant au moins un de ces inconvénients.

Le document FR-3 014 940 présente une machine conforme au préambule de la revendication 1.

### EXPOSE DE L'INVENTION

A cet effet, on prévoit une machine hydraulique tournante comprenant :
- un boitier,
- un arbre monté rotatif par rapport au boitier,
- une jupe rigidement solidaire de l'arbre et s'étendant autour d'au moins une partie du boîtier,
- une came rigidement solidaire de l'un parmi le boitier et l'arbre,
- un bloc-cylindres solidaire en rotation de l'autre parmi le boitier et l'arbre, le bloc-cylindres comprenant des pistons aptes à coopérer avec la came pour générer une rotation relative entre l'arbre et le boitier,
- des premier et deuxième paliers de guidage chacun en appui directement contre le boitier et la jupe, et
- au moins un troisième palier de guidage directement en appui contre le boîtier et le bloc-cylindres.

Ainsi, le troisième palier assure une reprise par le boitier d'une partie au moins des efforts générés ou transmis par le bloc-cylindres. Ces efforts ne sont donc plus transmis directement à l'arbre ni aux premier et deuxième paliers. Il s'agit, selon la configuration du ou des paliers supplémentaires, des efforts axiaux par référence à un axe de l'arbre, des efforts radiaux ou des deux. Avec ce montage, les premier et deuxième paliers restent donc dédiés à l'effort de transmission de la machine. Ces paliers n'étant plus perturbés par tout ou partie des efforts parasites générés par le bloc-cylindres et le distributeur, on renforce la robustesse du moteur. Notamment, la robustesse de ces paliers à volume égal n'est plus menacée. Ou bien on peut réduire leur volume, et donc réduire l'encombrement du moteur sans nuire à ses performances. De plus, en cas de reprise des efforts axiaux, il n'est plus nécessaire de compenser un effort axial parasite venant de la poussée du distributeur par une augmentation de la précontrainte sur les premier et deuxième paliers.

Dans un mode de réalisation, les premier, deuxième et troisième paliers sont les seuls paliers aptes à guider dans la machine une rotation de l'arbre par rapport au boitier.

Ainsi, on ne prévoit pas de palier supplémentaire en plus de ces trois paliers.

Dans un autre mode de réalisation, la machine comprend en outre un quatrième palier directement en appui contre le boîtier et le bloc-cylindres.

On peut prévoir que le troisième palier ou au moins l'un des troisième et quatrième paliers est en appui :
- contre le boîtier et le bloc-cylindres suivant une direction d'un axe de l'arbre ;
- contre le boîtier et le bloc-cylindres suivant une direction radiale à l'axe ; ou encore
- contre le boîtier et le bloc-cylindres suivant la direction de l'axe et suivant une direction radiale à l'axe.

Dans un mode de réalisation, le troisième palier est en appui contre le boîtier et le bloc-cylindres suivant une direction d'un axe de l'arbre, et le quatrième palier est en appui contre le boîtier et le bloc-cylindres suivant une direction radiale à l'axe.

Ainsi ces deux paliers assurent les reprises des efforts axiaux et radiaux respectivement.

On peut prévoir que le troisième palier ou au moins l'un des troisième et quatrième paliers comprend un roulement.

Par exemple, le roulement est un roulement à rouleaux ou à aiguilles.

Dans une configuration, les rouleaux ou les aiguilles s'étendent suivant un plan perpendiculaire à un axe de l'arbre.

Cette configuration est particulièrement efficace et peu encombrante pour une reprise des efforts axiaux parasites. Le roulement forme alors une butée axiale.

On peut prévoir que le troisième palier ou au moins l'un des troisième et quatrième paliers comprend un coussinet.

Au contraire d'un roulement qui comprend des pièces mobiles les unes par rapport aux autres, le coussinet n'en comporte pas. Il s'agit d'un solide contre les deux faces principales duquel le boitier et le bloc-cylindres viennent en appui.

Par exemple, le coussinet est cylindrique.

Dans un autre exemple, le coussinet est tronconique.

Un tel coussinet permet une reprise d'efforts axiaux et radiaux. Il tend vers un appui normal à la trajectoire du bloc-cylindres lorsqu'il est soumis à un effort parasite, ce qui permet d'optimiser les pressions de contact du boitier et du bloc-cylindres sur le coussinet. Il permet une forte réduction du déport axial, et rend possible d'aménager les formes du boitier et du bloc-cylindres afin d'améliorer encore la répartition des pressions de contact sur le coussinet.

On peut prévoir que le coussinet présente une fente s'étendant depuis un premier bord d'extrémité axiale du coussinet jusqu'à un deuxième bord d'extrémité axiale du coussinet.

Cette fente permet une bonne adaptation du coussinet au logement défini entre le boitier et le bloc-cylindres, en autorisant notamment une modification du diamètre du coussinet.

On peut aussi prévoir que le coussinet comprend au moins un élément de blocage en rotation du coussinet par rapport à une pièce de la machine.

Avantageusement, le coussinet présente au moins un évidement traversant une épaisseur du coussinet et interceptant au plus un bord d'extrémité du coussinet.

Un ou plusieurs évidements de ce type favorisent la circulation d'un liquide de lubrification sur les deux faces du coussinet et sa bonne répartition.

Dans un mode de réalisation, le troisième palier comprend un roulement à rouleaux ou à aiguilles dans lequel les rouleaux ou les aiguilles s'étendent suivant un plan perpendiculaire à un axe de l'arbre, et le quatrième palier comprend un coussinet cylindrique.

Ce mode de réalisation combine donc la butée axiale sous la forme d'un roulement et le coussinet pour la reprise des efforts radiaux. Il est particulièrement peu encombrant.

On peut aussi prévoir que le bloc-cylindres, le boitier et au moins l'un des paliers sont conformés pour centrer le bloc-cylindres par rapport au boitier par complémentarité de forme indépendamment de l'arbre.

On peut prévoir que le bloc-cylindres est monté glissant sur des cannelures de l'arbre.

On prévoit également selon l'invention un engin, formant un véhicule ou un engin de chantier, équipé d'au moins une machine hydraulique selon l'invention.

### DESCRIPTION DES FIGURES

Nous allons maintenant présenter des modes de réalisation de l'invention à titre d'exemples non-limitatifs à l'appui des dessins sur lesquels :
- la figure 1 est une vue partielle en coupe axiale d'une machine selon un premier mode de réalisation de l'invention ;
- la figure 2 est une vue en coupe transversale de la machine de la figure 1 dans un plan perpendiculaire à l'axe comprenant le bloc-cylindres et les pistons ;
- la figure 3 est une vue à plus grande échelle du détail D de la figure 1 ;
- les figures 4 et 5 sont deux vues en perspective du coussinet de la machine de la figure 3 ;
- la figure 6 est une vue en perspective montrant la répartition des pressions de contact sur le coussinet ;
- la figure 7 est une vue analogue à la figure 3 montrant une machine selon un deuxième mode de réalisation de l'invention ;
- les figures 8 et 9 sont des vues en perspective de la machine de la figure précédente dans laquelle le bloc-cylindres a été ôté et montrant donc le boîtier ; et
- les figures 10 et 11 sont des vues en perspective montrant deux faces respectives du bloc-cylindres de la machine.

### Premier mode de réalisation

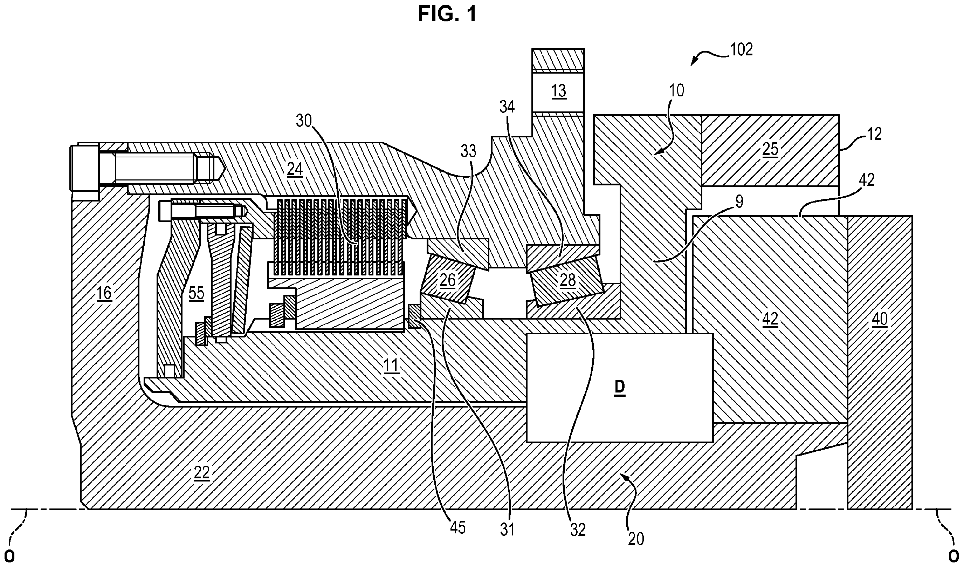

La machine hydraulique 102 selon le premier mode de réalisation de l'invention, illustrée sur les figures 1 à 6, est à symétrie de révolution et centrée sur un axe O-O. Elle comprend un boîtier 10, un arbre 20, un ensemble formant moteur ou pompe 25 disposé entre le boîtier 10 et l'arbre 20, des paliers 26, 28 de guidage à rotation relative de l'arbre 20 par rapport au boîtier 10 et un frein 30.

Le boîtier 10 est destiné à être fixé au châssis d'une machine ou d'un véhicule.

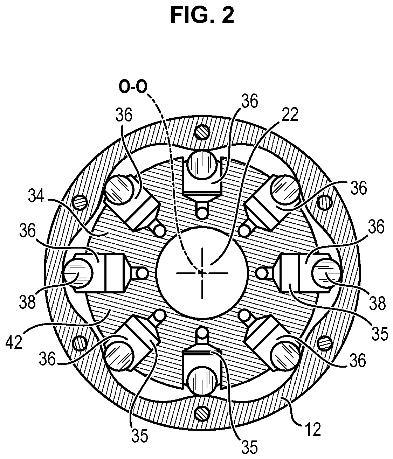

L'ensemble 25 comprend une came 12 à lobes multiples illustrée à la figure 2, prise en sandwich entre deux éléments latéraux du boîtier dont l'un se situe à droite sur la figure 1 et n'est pas visible.

L'arbre 20 est agencé pour supporter une prise de force adaptée pour porter un accessoire qui doit être entraîné à rotation, par exemple la jante d'une roue ou tout autre équipement, dans le cas où la machine constitue un moteur. Dans le cas où elle constitue une pompe, la prise de force reçoit un couple mécanique moteur appliqué sur l'entrée de la machine.

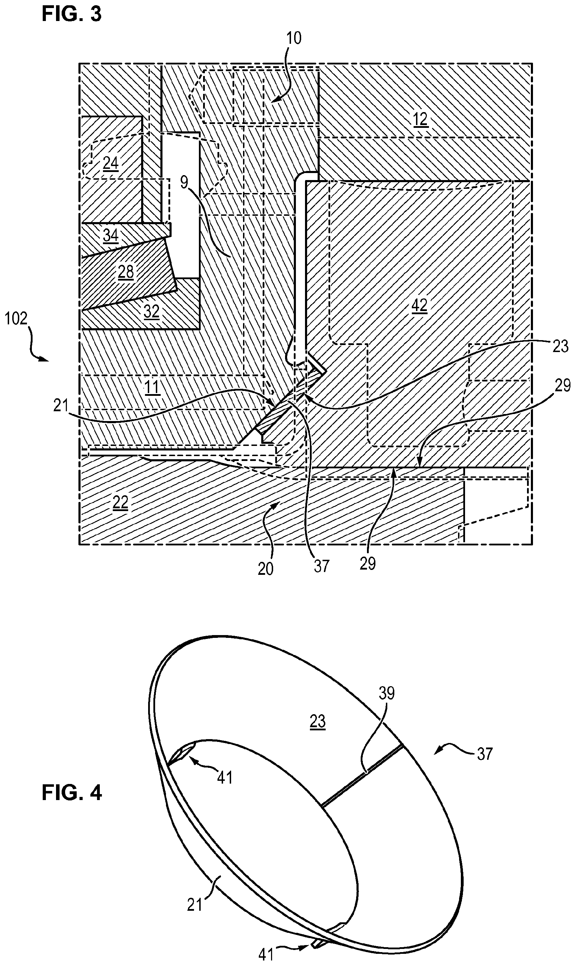

L'ensemble formant moteur ou pompe 25 est à pistons radiaux 36. Il comprend un distributeur 40 et un bloc-cylindres 42 qui présente des cylindres radiaux 35 logeant les pistons 36 respectifs, comme illustré à la figure 2. Chaque piston porte un galet 38 en appui contre la came 12 solidaire du boîtier. Le nombre de cylindres et donc de pistons diffère du nombre de lobes de la came 12. Comme dans la machine de ce mode la came est radialement externe, le bloc-cylindres, situé radialement à l'intérieur de la came, a ses cylindres qui débouchent radialement vers l'extérieur, en regard de la came. Le distributeur 40 est alimenté en fluide via un élément, connu et non-illustré, qui forme couvercle pour le boitier et raccord pour l'alimentation du distributeur. Comme illustré à la figure 3, le bloc-cylindres 42 est lié à rotation avec l'arbre 20 par des cannelures longitudinales 29 du bloc-cylindres et de l'arbre en prise mutuelle de sorte que le bloc-cylindres est ici monté glissant sur l'arbre suivant la direction axiale.

De façon connue en soi, lorsque le distributeur 40 applique cycliquement un fluide sous pression à l'intérieur des cylindres 35, la sollicitation des pistons 36 et des galets 38 associés sur la came 12 entraîne le bloc-cylindres 42 à rotation par rapport à la came et par conséquent par rapport au boîtier. L'arbre est ainsi entraîné à rotation par la pression du fluide. La machine constitue dans ce cas un moteur.

Lorsque, au contraire, un effort mécanique est appliqué par la prise de force sur l'arbre 20 dans le sens d'un entraînement à rotation par rapport au boîtier 10, le déplacement des galets et des pistons par rapport aux lobes de la came induit une variation de volume des cylindres et par conséquent applique une pression de fluide sur le distributeur. La machine fonctionne alors en pompe. Cette machine est ainsi réversible, et donc fonctionne indifféremment en tant que pompe ou moteur, et peut également tourner dans deux sens de rotation.

L'arbre 20 présente une zone centrale ou moyeu 22 interceptée par l'axe O-O. Il comprend aussi une extension cylindrique axiale éloignée de l'axe, formant une jupe 24 ou une couronne et reliée au moyeu par un disque radial de liaison 16 s'étendant à une extrémité axiale de l'arbre, à gauche sur la figure 1. La jupe 24 s'étend donc vers la droite sur la figure à partir de ce disque.

Le boîtier 10 présente quant à lui une extension axiale cylindrique 11 s'étendant en direction de la gauche sur la figure 1, depuis une extension radiale 9 reliée au couvercle non-illustré. Cette extension axiale 11 vient entourer le moyeu 22 de l'arbre 20 et s'étend en regard de ce dernier suivant la direction radiale à l'axe. Elle est donc interposée en direction radiale entre le moyeu 22 et la jupe 24.

On voit donc que, dans cette configuration donnée à titre d'exemple, la jupe 24 est rigidement solidaire du moyeu 22 de l'arbre et s'étend autour de l'extension 11 du boîtier. La came 12 est rigidement solidaire du boitier et le bloc-cylindres 42 solidaire en rotation de l'arbre 20.

La machine comprend un frein 30 qui est du type frein à disques. Il est formé d'un empilement de disques reliés à rotation les uns à l'arbre 20 et les autres au boîtier 10 suivant une alternance spatiale le long de l'axe longitudinal O-O. Chacun des disques est formé d'une rondelle. Leur liaison à rotation au boîtier et à l'arbre respectivement peut être formée par exemple par l'engagement de nervures prévues sur la périphérie radialement externe ou alternativement radialement interne des disques dans des cannelures ou rainures complémentaires formées en regard sur la jupe 24 de l'arbre et l'extension 11 de boîtier respectivement associés. En variante, on peut prévoir une pièce intermédiaire de liaison à rotation intercalée entre les disques et l'un du boîtier 10 ou de l'arbre 20.

La machine présente une chambre de défreinage 55 placée à l'opposé du bloc-cylindres 42 en direction axiale par rapport à l'empilement de disques. Elle se situe ainsi sur la figure 1 à gauche de cet empilement. Le frein 30 est disposé en l'espèce à une extrémité axiale de la machine opposée au distributeur 40 par rapport au bloc-cylindres 42. Au repos, les disques sont sollicités en appui mutuel par un ressort, de sorte que l'arbre 20 et le boitier 10 sont immobilisés l'un par rapport à l'autre en situation de freinage. Si on donne un espacement aux disques en remplissant de fluide la chambre de défreinage 55 pour contrer la sollicitation du ressort, on autorise la rotation de l'arbre par rapport au boîtier.

Pour limiter l'encombrement axial de la machine, la prise de force 13 peut être prévue sur l'extérieur d'un élément radialement externe à la jupe 24, comme dans le cas de la figure 1. Selon une variante de réalisation, la prise de force est placée axialement sur un disque transversal à l'axe O-O.

La machine de la figure 1 comprend deux paliers de guidage, à savoir un premier palier 26 et deuxième palier 28, chacun en appui directement contre l'extension 11 et la jupe 24. Les deux paliers sont ici en appui chacun contre une zone d'extrémité axiale de la jupe, contre sa face orientée en direction de l'axe et de l'extension 11 du boîtier. Ils sont ici aussi en appui contre une portion médiane de l'extension 11 de l'arbre, contre une face orientée en direction opposée à l'axe, en direction de la jupe 24.

Il s'agit ici de roulements à rouleaux tronconiques mais en variante on pourrait prévoir des roulements à rouleaux cylindriques ou des roulements à billes par exemple. Les axes des éléments roulants sont inclinés par rapport à l'axe O-O et forment un tronc de cône dans chaque roulement. Ainsi, pour le palier 26 situé le plus près du frein 30, cet axe intercepte l'axe principal O-O de sorte que le palier se trouve entre le frein 30 et ce point d'intersection. À l'inverse, pour le palier 28 situé le plus près du distributeur 40, l'axe des éléments roulants intercepte l'axe principal de sorte que le palier 28 se trouve entre le distributeur 40 et le point d'intersection.

Chacun des paliers comprend une bague interne 31, 32 et une bague externe 33, 34. La bague interne 31 du roulement de gauche est en appui axial contre un anneau d'arrêt 45 fixé à l'extension 11 du boîtier, en direction opposée au distributeur 40 tandis que sa bague externe 33 est en appui axial contre un épaulement de la jupe 24 en direction du distributeur 40. La bague interne 32 du palier de droite est en appui axial contre l'extension radiale 9 du boîtier en direction du distributeur tandis que sa bague externe 34 est en appui axial contre un épaulement de la jupe 24 en direction opposée. Dans la configuration illustrée, et bien que d'autres configurations soient envisageables, les deux paliers sont en regard l'un de l'autre suivant la direction axiale.

Comme illustré aux figures 3 à 5, la machine 102 comprend dans ce mode de réalisation un troisième palier de guidage 37.

Le troisième palier 37 comprend un coussinet tronconique. Il s'agit d'une pièce solide qui ne comprend pas de parties montées mobiles les unes par rapport aux autres à la différence d'un roulement. Elle présente en particulier deux faces principales tronconiques externe 21 et interne 23 toute deux délimitées par deux bords circulaires d'extrémité axiale communs formant respectivement les petit et grand diamètres du cône.

Ce palier 37 est directement en appui contre le boîtier 10 et le bloc-cylindres 42, à chaque fois suivant la direction de l'axe O-O et suivant une direction radiale à l'axe. Dans le cas présent, il est en appui par sa face externe 21 contre une face tronconique du boîtier située à la jonction entre ses extensions axiale 11 et radiale 9. De même, il est en appui par sa face interne 23 contre une face tronconique du bloc-cylindres 42.

Les premier, deuxième et troisième paliers 26, 28 et 37 sont les seuls paliers de guidage de la rotation de l'arbre par rapport au boitier dans la machine. Dans ce mode de réalisation, ces trois paliers se trouvent d'un même côté du bloc-cylindres 42 suivant la direction axiale, à savoir du côté du frein et du côté opposé au distributeur 40. Les deux paliers 26, 28 sont d'un même côté du palier 37.

Le coussinet 37 présente une fente 39 s'étendant ici dans un plan radial à l'axe, du premier bord d'extrémité du coussinet jusqu'au deuxième. Il comprend aussi un ou plusieurs éléments 41 de blocage en rotation du coussinet par rapport à une pièce de la machine, formée ici par le boitier. Il s'agit dans le présent exemple de deux languettes rectangulaires 41 s'étendant suivant la direction axiale en saillie du bord du coussinet situé au plus petit diamètre. Naturellement, il est possible de faire varier le nombre, la forme, l'emplacement et l'orientation des éléments de blocage en rotation.

Grâce à cet agencement au moyen de faces tronconiques, le bloc-cylindres 42, le boitier 10 et le palier 37 sont conformés pour centrer le bloc-cylindres par rapport au boitier par complémentarité de forme indépendamment de l'arbre.

Le boîtier 10 et plus précisément au moins sa face formant une portée conique en appui contre le coussinet est réalisée par exemple en fonte ou en acier fondu ou moulé. Le bloc-cylindres 42 est par exemple réalisé en acier traité usiné, éventuellement après forgeage. Le coussinet 37 est par exemple monté statique sur le corps de boîtier 10, c'est-à-dire fixe par rapport à celui-ci. Il est au contraire monté glissant, à rotation relative, par rapport au bloc-cylindres 42. En effet, dans cet exemple, le bloc-cylindres 42, réalisé en acier traité usiné, est plus lisse et plus dur que la pièce de fonderie rugueuse formant l'extension 11 du boîtier.

Par ailleurs, on peut prévoir que le coussinet lisse conique 37 répond aux caractéristiques suivantes quant à sa composition.

En premier lieu, la surface 23 du coussinet 37 qui repose sur la surface en regard en déplacement relatif à rotation, soit en l'espèce la portée du bloc-cylindres 42, est adaptée pour présenter un état de surface à faible coefficient de friction. Cet état peut être obtenu par un traitement de surface de la face 23 du coussinet. Il peut aussi être obtenu par le choix du matériau composant cette face. A cette fin, elle peut être formée par un matériau synthétique à faible coefficient de friction ou encore en un matériau dit « de glissement », par exemple à base de polyfluorure de vinylidine (PVDF) ou de polyétheréthercétone (PEEK). La surface peut également être chargée par des particules de glissement, telles que des particules de bronze ou des morceaux d'un matériau synthétique fluoré, par exemple du polytétrafluoroéthylène.

En second lieu, le coussinet 37 peut être composé d'une âme, par exemple une âme en acier, sur laquelle est déposée une couche de matériau à faible coefficient de friction, telle que mentionné ci-dessus, le cas échéant avec interposition d'une couche intermédiaire adaptée pour assurer l'adhésion de la couche superficielle à faible coefficient de friction. Une telle couche intermédiaire peut être formée à base de bronze, par exemple de billes de bronze, ou d'un matériau fritté poreux, par exemple aggloméré et fixé à l'âme par exemple par fusion. La couche superficielle à faible coefficient de friction peut être imprimée ou imprégnée sur la couche intermédiaire, préférentiellement poreuse. Le coussinet est alors formé d'une structure à trois couches.

A titre de variante, le coussinet 37 peut être formé par dépôt du matériau à faible coefficient de friction ou « matériau de glissement », par exemple en bronze ou en matériau synthétique, directement sur l'âme, par exemple en métal, notamment en acier. Dans ce cas, la couche intermédiaire précitée est omise. Le coussinet 37 est alors formé d'une structure à deux couches.

Au titre d'une autre variante, il peut être monocouche en un matériau massif à faible coefficient de friction, par exemple en bronze massif.

Les bronzes phosphoreux sont particulièrement aptes au glissement sur de l'acier.

De préférence, le coussinet 37 est par exemple formé par roulage conique à partir d'un flanc en métal.

Une fois formé, l'ouverture angulaire du coussinet est de préférence comprise entre 30 et 60°, par exemple de l'ordre de 45°. On entend par « ouverture angulaire du coussinet » l'angle formé entre l'axe O-O de la machine et les faces tronconiques du coussinet.

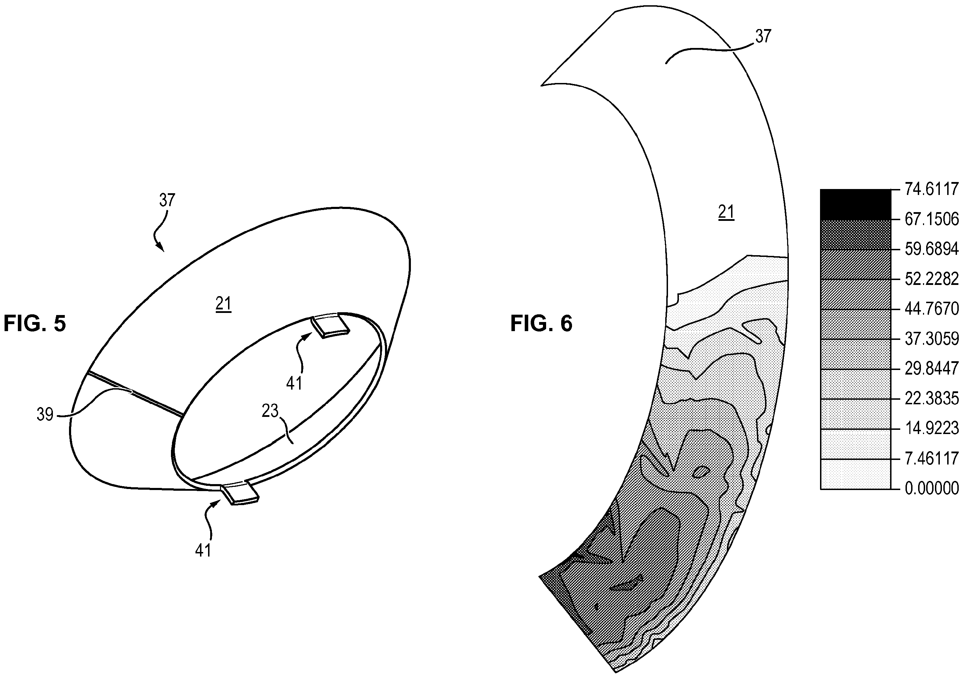

Grâce à cet agencement, on observe une forte réduction du déport axial du bloc-cylindres sur l'arbre. De plus, les faces tronconiques en appui sur le coussinet permettent d'optimiser les pressions de contact sur ce dernier. Le coussinet ainsi orienté tend vers un appui normal à la trajectoire du bloc-cylindres lorsqu'il est soumis à un effort parasite, permettant ainsi d'optimiser les pressions de contact sur le coussinet. On a illustré à la figure 6 un aperçu d'un calcul de ces pressions de contact lorsqu'on applique à la machine, fonctionnant en moteur, une pression de 450 bars (soit 450.10⁵ Pa). On observe que la pression est quasi-nulle sur plus de la moitié du coussinet (en définissant des moitiés de part et d'autre d'un plan radial) et dans l'autre moitié dépasse 50 bars (50.10⁵ Pa) uniquement sur un court tronçon circonférentiel du coussinet, ici au bas de la figure. De plus, les effets de bords sont peu intenses. Le coussinet reprend donc convenablement les efforts de distribution et les efforts parasites transmis directement par le bloc-cylindres, et ce malgré le montage glissant du bloc-cylindres sur l'arbre. Les deux paliers 26, 28 ne reçoivent donc pas les efforts parasites par l'arbre.

Une telle machine peut équiper un engin, formant un véhicule ou un engin de chantier.

On peut prévoir, en variante, que le coussinet présente au moins un évidement traversant une épaisseur du coussinet et interceptant au plus un bord d'extrémité du coussinet. Un tel évidement favorise la bonne répartition du liquide de lubrification sur les deux faces 21, 23 du coussinet lors du fonctionnement de la machine.

### Deuxième mode de réalisation

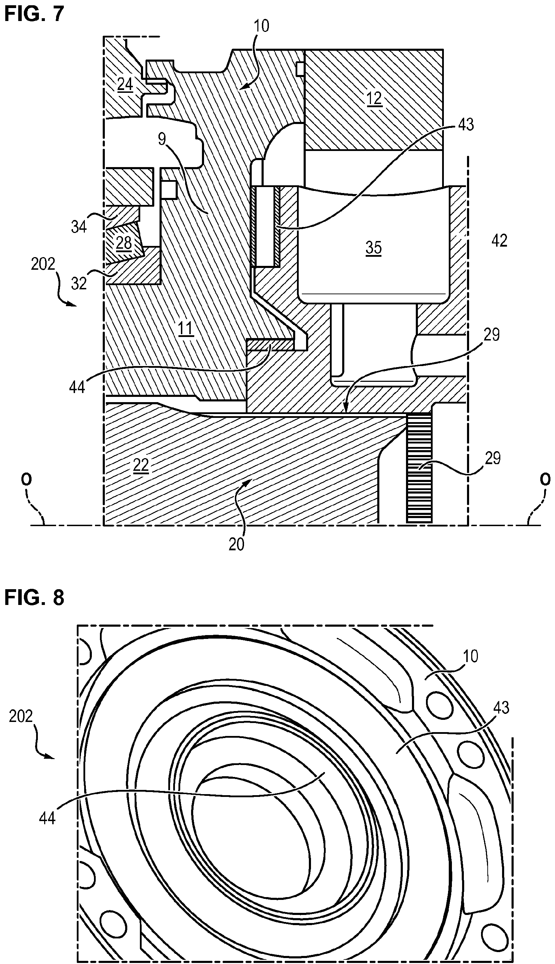

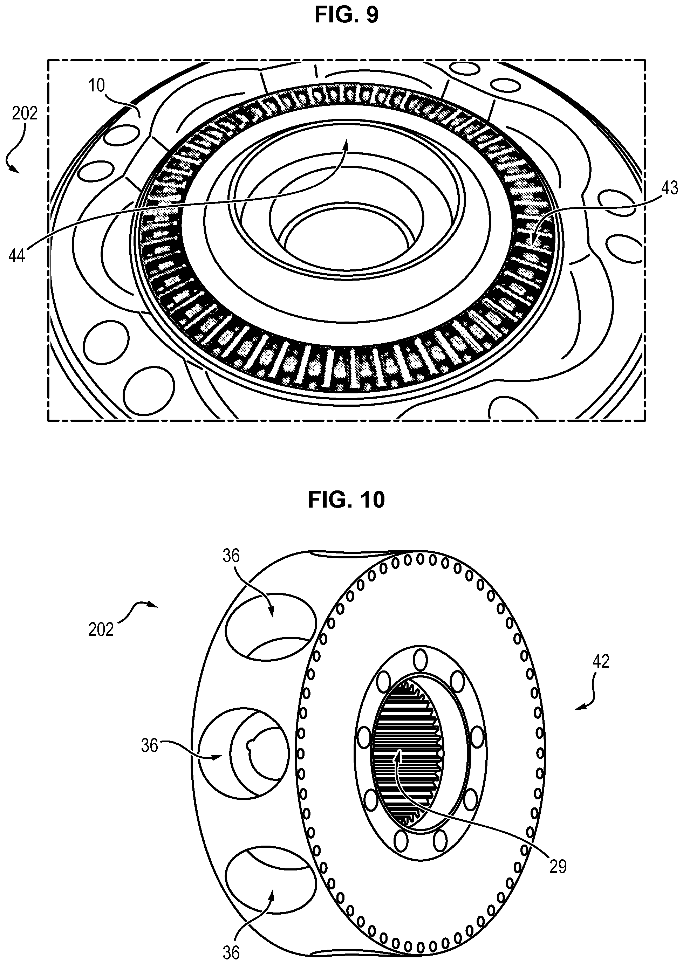

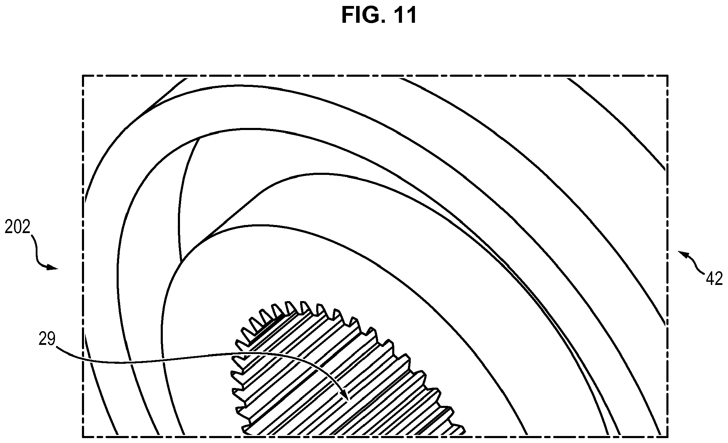

Nous allons maintenant présenter un deuxième mode de réalisation de l'invention à l'appui des figures 7 à 11. Seules les caractéristiques qui différencient ce mode de réalisation du précédent vont être décrites, les autres étant inchangées.

Dans cette machine 202, le coussinet tronconique est remplacé par deux paliers 43, 44.

Le troisième palier 43 est plat et directement en appui axial contre l'extension radiale 9 du boîtier et le bloc-cylindres 42. Il est formé par un roulement à rouleaux ou à aiguilles dans lequel les rouleaux ou les aiguilles s'étendent suivant un même plan perpendiculaire à l'axe. Dans cet exemple, le palier 43 est reçu sur un épaulement ménagé dans la face du bloc-cylindres 42 dirigée vers le frein et en regard du boîtier, l'épaulement traversant un évidement central du palier. Il est également en appui axial contre une face du boîtier dirigée vers le bloc-cylindres.

Le quatrième palier 44 est en appui contre le boîtier 10 et le bloc-cylindres 42 suivant une direction radiale. Il est formé par un coussinet cylindrique sans parties internes mobiles. Ce coussinet est en appui par sa face interne contre une face cylindrique du bloc-cylindres et par sa face externe contre une face cylindrique de l'extension radiale 9 du boîtier.

Ainsi, le troisième palier 43 forme une butée axiale et reprend les efforts axiaux transmis par le bloc-cylindres. Cela évite de perturber les paliers 26, 28. Le choix d'un roulement à rouleaux ou à aiguilles ne pénalise pas la longueur du moteur.

Le quatrième palier 44 forme une butée de recentrage et reprend les efforts radiaux. Il évite que le bloc-cylindres transmette à l'arbre des efforts de flexion, notamment dans le cas où l'arbre est relativement long.

Les fonctions d'appui axial et radial qui étaient assurées conjointement par le coussinet dans le précédent mode de réalisation sont donc cette fois assurées respectivement par des organes distincts 43, 44.

Cette fois ce sont les quatre paliers 26, 28, 43 et 44 qui se trouvent tous du même côté du bloc-cylindres 42 que le frein. Les deux paliers 26, 28 sont d'un même côté des paliers 43, 44. Ces deux derniers, dans cet exemple, sont interceptés par un même plan radial.

Bien entendu, on pourra apporter à l'invention de nombreuses modifications sans sortir du cadre de celle-ci, qui est défini par l'objet respectif des revendications ci-dessous.

## Revendications

1. Machine hydraulique tournante (102 ; 202) comprenant :
- un boitier (10),
- un arbre (20) monté rotatif par rapport au boitier,
- une came (12) rigidement solidaire de l'un parmi le boitier et l'arbre,
- un bloc-cylindres (42) solidaire en rotation de l'autre parmi le boitier et l'arbre, le bloc-cylindres comprenant des pistons (36) aptes à coopérer avec la came pour générer une rotation relative entre l'arbre et le boitier, et
- des premier et deuxième paliers de guidage (26, 28) chacun en appui directement contre le boitier,
**caractérisée en ce qu'**elle comprend :
- une jupe (24) rigidement solidaire de l'arbre et s'étendant autour d'au moins une partie du boîtier, les premier et deuxième paliers de guidage (26, 28) étant chacun en appui directement contre la jupe, et
- au moins un troisième palier de guidage (37 ; 43, 44) directement en appui contre le boîtier et le bloc-cylindres.

2. Machine (102) selon la revendication précédente dans laquelle les premier, deuxième et troisième paliers (26, 28, 37) sont les seuls paliers aptes à guider dans la machine une rotation de l'arbre par rapport au boitier.

3. Machine (202) selon la revendication 1 qui comprend en outre un quatrième palier (44) directement en appui contre le boîtier et le bloc-cylindres.

4. Machine (102 ; 202) selon au moins l'une des revendications précédentes dans laquelle le troisième palier (37) ou au moins l'un (43) des troisième et quatrième paliers est en appui contre le boîtier et le bloc-cylindres suivant une direction d'un axe de l'arbre.

5. Machine (102 ; 202) selon au moins l'une des revendications précédentes dans laquelle le troisième palier (37) ou au moins l'un (44) des troisième et quatrième paliers est en appui contre le boîtier et le bloc-cylindres suivant une direction radiale à un axe de l'arbre.

6. Machine (102) selon au moins l'une des revendications précédentes dans laquelle le troisième palier (37) ou au moins l'un des troisième et quatrième paliers est en appui contre le boîtier et le bloc-cylindres suivant une direction d'un axe de l'arbre et suivant une direction radiale à l'axe.

7. Machine (202) selon au moins l'une des revendications 3 à 6 dans laquelle le troisième palier (43) est en appui contre le boîtier et le bloc-cylindres suivant une direction d'un axe de l'arbre, et le quatrième palier (44) est en appui contre le boîtier et le bloc-cylindres suivant une direction radiale à l'axe.

8. Machine (202) selon au moins l'une des revendications précédentes dans laquelle le troisième palier ou au moins l'un (43) des troisième et quatrième paliers comprend un roulement.

9. Machine (202) selon la revendication précédente dans laquelle le roulement (43) est un roulement à rouleaux ou à aiguilles.

10. Machine (202) selon la revendication précédente dans laquelle les rouleaux ou les aiguilles s'étendent suivant un plan perpendiculaire à un axe de l'arbre.

11. Machine (102 ; 202) selon au moins l'une des revendications précédentes dans laquelle le troisième palier (37) ou au moins l'un (44) des troisième et quatrième paliers comprend un coussinet.

12. Machine (202) selon la revendication précédente dans laquelle le coussinet (44) est cylindrique.

13. Machine (102) selon la revendication 11 dans laquelle le coussinet (37) est tronconique.

14. Machine (102 ; 202) selon au moins l'une des revendications 11 et 12 dans laquelle le coussinet (37 ; 44) présente une fente s'étendant depuis un premier bord d'extrémité axiale du coussinet jusqu'à un deuxième bord d'extrémité axiale du coussinet.

15. Machine (102) selon au moins l'une des revendications 11 à 14 dans laquelle le coussinet (37) comprend au moins un élément (41) de blocage en rotation du coussinet par rapport à une pièce de la machine.

16. Machine (202) selon au moins l'une des revendications 3 à 15 dans laquelle le troisième palier (43) comprend un roulement à rouleaux ou à aiguilles dans lequel les rouleaux ou les aiguilles s'étendent suivant un plan perpendiculaire à un axe de l'arbre, et le quatrième palier (44) comprend un coussinet cylindrique.

17. Machine (102 ; 202) selon au moins l'une des revendications précédentes dans laquelle le bloc-cylindres (42) est monté glissant sur des cannelures (29) de l'arbre.

18. Machine (102 ; 202) selon au moins l'une des revendications précédentes dans laquelle le bloc-cylindres (42), le boitier (10) et au moins l'un (37 ; 44) des paliers sont conformés pour centrer le bloc-cylindres par rapport au boitier par complémentarité de forme indépendamment de l'arbre.

19. Engin, formant un véhicule ou un engin de chantier, équipé d'au moins une machine hydraulique (102 ; 202) selon au moins l'une des revendications précédentes.

## Patentansprüche

1. Drehende hydraulische Maschine (102; 202), umfassend:
- ein Gehäuse (10),
- eine Welle (20), die in Bezug auf das Gehäuse drehend angebracht ist,
- einen Nocken (12), der starr mit einem von dem Gehäuse und der Welle verbunden ist,
- einen Zylinderblock (42), der drehfest mit dem anderen von dem Gehäuse und der Welle verbunden ist, wobei der Zylinderblock Kolben (36) umfasst, die mit dem Nocken zusammenwirken können, um eine relative Drehung zwischen der Welle und dem Gehäuse zu erzeugen,
- ein erstes und zweites Führungslager (26, 28), die jeweils direkt an dem Gehäuse anliegen,
**dadurch gekennzeichnet, dass** sie umfasst:
- eine Schürze (24), die starr mit der Welle verbunden ist und sich um mindestens einen Teil des Gehäuses erstreckt, wobei das erste und zweite Führungslager (26 28) jeweils direkt an der Schürze anliegen, und
- mindestens ein drittes Führungslager (37; 43, 44), das direkt an dem Gehäuse und dem Zylinderblock anliegt.

2. Maschine (102) nach vorhergehendem Anspruch, wobei das erste, zweite und dritte Lager (26, 28, 37) die einzigen Lager sind, die imstande sind, in der Maschine eine Drehung der Welle relativ zum Gehäuse zu führen.

3. Maschine (202) nach Anspruch 1, die ferner ein viertes Lager (44) umfasst, das direkt an dem Gehäuse und dem Zylinderblock anliegt.

4. Maschine (102; 202) nach mindestens einem der vorhergehenden Ansprüche, wobei das dritte Lager (37) oder mindestens eines (43) von dem dritten und vierten Lager in einer Richtung einer Achse der Welle an dem Gehäuse und dem Zylinderblock anliegt.

5. Maschine (102; 202) nach mindestens einem der vorhergehenden Ansprüche, wobei das dritte Lager (37) oder mindestens eines (44) von dem dritten und vierten Lager in einer Richtung radial zu einer Achse der Welle an dem Gehäuse und dem Zylinderblock anliegt.

6. Maschine (102) nach mindestens einem der vorhergehenden Ansprüche, wobei das dritte Lager (37) oder mindestens eines von dem dritten und vierten Lager in einer Richtung einer Achse der Welle und in einer Richtung radial zu der Achse an dem Gehäuse und dem Zylinderblock anliegt.

7. Maschine (202) nach mindestens einem der Ansprüche 3 bis 6, wobei das dritte Lager (43) in einer Richtung einer Achse der Welle an dem Gehäuse und dem Zylinderblock anliegt und das vierte Lager (44) in einer Richtung radial zu der Achse an dem Gehäuse und dem Zylinderblock anliegt.

8. Maschine (202) nach mindestens einem der vorhergehenden Ansprüche, wobei das dritte Lager oder mindestens eines (43) von dem dritten und vierten Lager ein Wälzlager umfasst.

9. Maschine (202) nach vorhergehendem Anspruch, wobei das Wälzlager (43) ein Rollen- oder Nadellager ist.

10. Maschine (202) nach vorhergehendem Anspruch, wobei sich die Rollen oder Nadeln in einer Ebene senkrecht zu einer Achse der Welle erstrecken.

11. Maschine (102; 202) nach mindestens einem der vorhergehenden Ansprüche, wobei das dritte Lager (37) oder mindestens eines (44) von dem dritten und vierten Lager eine Lagerbuchse umfasst.

12. Maschine (202) nach vorhergehendem Anspruch, wobei die Lagerbuchse (44) zylindrisch ist.

13. Maschine (102) nach Anspruch 11, wobei die Lagerbuchse (37) kegelstumpfförmig ist.

14. Maschine (102; 202) nach mindestens einem der Ansprüche 11 und 12, wobei die Lagerbuchse (37; 44) einen Schlitz aufweist, der sich von einer ersten axialen Endkante der Lagerbuchse zu einer zweiten axialen Endkante der Lagerbuchse erstreckt.

15. Maschine (102) nach mindestens einem der Ansprüche 11 bis 14, wobei die Lagerbuchse (37) mindestens ein Element (41) zur Drehblockierung der Lagerbuchse in Bezug auf ein Maschinenteil aufweist.

16. Maschine (202) nach mindestens einem der Ansprüche 3 bis 15, wobei das dritte Lager (43) ein Rollen- oder Nadel-Wälzlager umfasst, bei dem sich die Rollen oder Nadeln in einer Ebene senkrecht zu einer Achse der Welle erstrecken, und das vierte Lager (44) eine zylindrische Lagerbuchse umfasst.

17. Maschine (102; 202) nach mindestens einem der vorhergehenden Ansprüche, wobei der Zylinderblock (42) gleitend auf Riffelungen (29) der Welle gelagert ist.

18. Maschine (102; 202) nach mindestens einem der vorhergehenden Ansprüche, wobei der Zylinderblock (42), das Gehäuse (10) und mindestens eines (37; 44) der Lager so ausgebildet sind, dass der Zylinderblock unabhängig von der Welle in Bezug auf das Gehäuse formschlüssig zentriert wird.

19. Gerät, das ein Fahrzeug oder eine Baumaschine bildet, das mit mindestens einer hydraulischen Maschine (102; 202) nach mindestens einem der vorhergehenden Ansprüche ausgestattet ist.

## Claims

1. A rotating hydraulic machine (102; 202) comprising:
- a casing (10),
- a shaft (20) rotatably mounted with respect to the casing,
- a cam (12) rigidly secured to one among the casing and the shaft,
- a cylinder block (42) secured in rotation to the other among the casing and the shaft,
the cylinder block comprising pistons (36) able to cooperate with the cam to generate a relative rotation between the shaft and the casing, and
- first and second guide bearings (26, 28) each directly in abutment against the casing,
**characterized in that** it comprises:
- a sleeve (24) rigidly secured to the shaft and extending around at least a portion of the casing, the first and second guide bearings (26, 28) each being directly in abutment against the sleeve, and
- at least a third guide bearing (37; 43, 44) directly in abutment against the casing and the cylinder block.

2. The machine (102) according to the preceding claim, wherein the first, second and third bearings (26, 28, 37) are the only bearings able to guide in the machine a rotation of the shaft with respect to the casing.

3. The machine (202) according to claim 1 which further comprises a fourth bearing (44) directly in abutment against the casing and the cylinder block.

4. The machine (102; 202) according to at least one of the preceding claims wherein the third bearing (37) or at least one (43) of the third and fourth bearings is in abutment against the casing and the cylinder block along a direction of an axis of the shaft.

5. The machine (102; 202) according to at least one of the preceding claims wherein the third bearing (37) or at least one (44) of the third and fourth bearings is in abutment against the casing and the cylinder block along a direction radial to an axis of the shaft.

6. The machine (102) according to at least one of the preceding claims, wherein the third bearing (37) or at least one of the third and fourth bearings is in abutment against the casing and the cylinder block along a direction of an axis of the shaft and along a direction radial to the axis.

7. The machine (202) according to at least one of claims 3 to 6 wherein the third bearing (43) is in abutment against the casing and the cylinder block along a direction of an axis of the shaft, and the fourth bearing (44) is in abutment against the casing and the cylinder block along a direction radial to the axis.

8. The machine (202) according to at least one of the preceding claims wherein the third bearing or at least one (43) of the third and fourth bearings comprises a rolling.

9. The machine (202) according to the preceding claim wherein the rolling (43) is a roller or needle bearing.

10. The machine (202) according to the preceding claim wherein the rollers or the needles extend along a plane perpendicular to an axis of the shaft.

11. The machine (102; 202) according to at least one of the preceding claims wherein the third bearing (37) or at least one (44) of the third and fourth bearings comprises a bushing.

12. The machine (202) according to the preceding claim wherein the bushing (44) is cylindrical.

13. The machine (102) according to claim 11 wherein the bushing (37) is frustoconical.

14. The machine (102; 202) according to at least one of claims 11 and 12 wherein the bushing (37; 44) has a slot extending from a first axial end edge of the bushing to a second axial end edge of the bushing.

15. The machine (102) according to at least one of claims 11 to 14 wherein the bushing (37) comprises at least one element (41) for blocking in rotation the bushing with respect to a part of the machine.

16. The machine (202) according to at least one of claims 3 to 15 wherein the third bearing (43) comprises a roller or needle bearing in which the rollers or the needles extend along a plane perpendicular to an axis of the shaft, and the fourth bearing (44) comprises a cylindrical bushing.

17. The machine (102; 202) according to at least one of the preceding claims, wherein the cylinder block (42), is slidably mounted on splines (29) of the shaft.

18. The machine (102; 202) according to at least one of the preceding claims wherein the cylinder block (42), the casing (10) and at least one (37; 44) of the bearings are shaped to center the cylinder block with respect to the casing in a form-fitting manner independently of the shaft.

19. A machinery, forming a vehicle or a construction machinery, equipped with at least one hydraulic machine (102; 202) according to at least one of the preceding claims.
